# EUROPEAN PATENT APPLICATION

(11) **EP 4 800 780 A1**
(43) Date of publication of application: **02.09.2026**
(21) Application number: 24900982.0
(22) Date of filing: 29.11.2024
(51) Int. Cl.: H01M 4/66, H01M 4/04, H01M 10/052, H01M 4/02

(54) **CURRENT COLLECTOR, ELECTRODE AND LITHIUM SECONDARY BATTERY**

(30) Priority: 05.12.2023 KR 20230174768
(71) Applicant: LG Chem, Ltd., Seoul 07336 (KR)
(72) Inventor: KO, Kyung Moon, Daejeon 34122 (KR); HONG, Ja Min, Daejeon 34122 (KR); JUNG, Soon Hwa, Daejeon 34122 (KR); LEE, Seung Ho, Daejeon 34122 (KR)
(74) Representative: Plasseraud IP
(86) International application number: PCT/KR2024/019315
(87) International publication number: WO 2025/121796

(57) **Abstract**

The present invention relates to a current collector comprising a primer layer including a conductive material, a binder, and a thickener, wherein the conductive material is a multi-walled carbon nanotube having a BET specific surface area of 170 m²/g or more, thereby exhibiting excellent adhesive strength with the electrode active material layer, low interfacial resistance, and excellent scratch resistance, and an electrode and a secondary battery including the same.

## Description

### [Technical Field]

### CROSS-REFERENCE TO RELATED APPLICATION

The present application claims priority to Korean Patent Application No. 10-2023-0174768, filed on December 05, 2023, the entire content of which is incorporated herein for all purposes by reference.

### Technical Field

The present invention relates to a current collector including a primer layer, and an electrode and a lithium secondary battery including the same.

### [Background Art]

Recently, as the application area of lithium secondary batteries has rapidly expanded to not only power supply for electronic devices such as electric, electronic, communication, and computers, but also power storage supply for large-area devices such as automobiles and power storage devices, the demand for high-capacity, high-output, and high-stability lithium secondary batteries is increasing.

The lithium secondary batteries are generally manufactured as follows: A slurry is prepared by mixing a positive electrode active material capable of intercalating and deintercalating lithium ions or a negative electrode active material capable of absorbing and releasing lithium ions, and optionally a binder and a conductive material. The slurries are applied to a positive electrode current collector and a negative electrode current collector, respectively, and the solvent is removed by heat, etc., thereby manufacturing a positive electrode and a negative electrode. The positive and negative electrodes are stacked on both sides of a separator to form an electrode assembly with a predetermined shape. Then, the electrode assembly and a non-aqueous electrolyte are inserted into a battery case to manufacture a lithium secondary battery. However, when manufacturing the positive electrode and negative electrode in this way, there is a problem that the solvent contained in the slurry needs to be removed through an additional process, and as a result, the cost of the manufacturing process increases and productivity is low. Therefore, a dry manufacturing method has been proposed in which each active material is positioned on a current collector in the form of a film and passed through a rolling roll.

Meanwhile, since the electrode manufactured by the dry manufacturing method of coating the electrode active material on the current collector without a solvent has weak adhesive strength between the current collector and the electrode active material layer, there is a problem that the electrode active material layer is detached from the current collector due to shrinkage and expansion of the electrode that occurs during charging and discharging of the secondary battery. Accordingly, a method has been proposed to provide a primer layer on the surface of the current collector to strengthen the adhesive strength between the current collector and the electrode active material layer.

The primer layer is usually composed of a binder and a conductive material, wherein the binder melts during high-temperature rolling to secure adhesive strength, and the conductive material can serve to lower the interfacial resistance with the electrode active material layer. However, since the conventional primer layer composed only of a binder and a conductive material has poor scratch resistance, there is a problem that scratches easily occur during rolling. Accordingly, there is a need for the development of a current collector coated with a primer layer that has excellent adhesive strength, low interfacial resistance, and excellent scratch resistance.

### [Disclosure]

### [Technical Problem]

The present invention has been devised to solve the problems of the above-mentioned prior art, and aims to provide a current collector having excellent scratch resistance along with excellent adhesive strength and low interfacial resistance characteristics.

In addition, the present invention aims to provide an electrode having an electrode active material layer on the above current collector.

Furthermore, the present invention aims to provide a lithium secondary battery including the above electrode.

### [Technical Solution]

In order to solve the above-mentioned problems, the present invention provides current collector, electrode, and lithium secondary battery.
(1) The present invention provides a current collector comprising: a metal layer and a primer layer coated on at least one surface of the metal layer, wherein the primer layer includes a conductive material, a binder, and a thickener, wherein the conductive material is a multi-walled carbon nanotube having a BET specific surface area of 170 m²/g or more, and a weight ratio of the conductive material to the binder is 1:1 or more and 10 or less.
(2) The present invention provides the current collector according to (1) above, wherein a content of the thickener is 5 parts by weight or more and 20 parts by weight or less, based on 100 parts by weight of the total weight of the conductive material, binder, and thickener.
(3) The present invention provides the current collector according to (1) or (2) above, wherein a content of the conductive material is 10 parts by weight or more and 50 parts by weight or less, based on 100 parts by weight of the total weight of the conductive material, binder, and thickener.
(4) The present invention provides the current collector according to any one of (1) to (3) above, wherein a content of the binder is 35 parts by weight or more and 75 parts by weight or less, based on 100 parts by weight of the total weight of the conductive material, binder, and thickener.
(5) The present invention provides the current collector according to any one of (1) to (4) above, wherein the binder is at least one selected from the group consisting of polyvinylidene fluoride, vinylidene fluoride-hexafluoropropylene copolymer, hydrogenated nitrile butadiene rubber, styrene butadiene rubber, polyacrylonitrile, polymethyl methacrylate, polyethylene, polytetrafluoroethylene, and polyacrylic acid.
(6) The present invention provides the current collector according to any one of (1) to (5) above, wherein the thickener is at least one selected from the group consisting of carboxymethylcellulose, polyvinylpyrrolidone, and polyvinyl alcohol.
(7) The present invention provides the current collector according to any one of (1) to (6) above, wherein a thickness of the primer layer is 0.2 µm or more and 2 µm or less.
(8) The present invention provides the current collector according to any one of (1) to (7) above, wherein a surface roughness of the primer layer is 1.1 µm or less.
(9) The present invention provides an electrode comprising: the current collector of any one of (1) to (8) above; and an electrode active material layer, wherein the electrode active material layer is attached on the primer layer of the current collector.
(10) The present invention provides the electrode according to (9) above, wherein an adhesive strength between the electrode active material layer and the primer layer is 40 gf/2cm or more as measured at a peeling speed of 100 mm/min in a 90° peel test.
(11) The present invention provides the electrode according to (9) or (10) above, wherein an interfacial resistance between the electrode active material layer and the current collector is 0.6 Ω·cm² or less.
(12) The present invention provides a lithium secondary battery comprising the electrode according to any one of (9) to (11) above.

### [Advantageous Effects]

The current collector of the present invention comprises a primer layer including a conductive material, a binder, and a thickener, wherein the conductive material is a multi-walled carbon nanotube having a BET specific surface area of 170 m²/g or more, thereby exhibiting excellent adhesive strength with the electrode active material layer, low interfacial resistance, and excellent scratch resistance.

In addition, the electrode of the present invention has an electrode active material layer attached to the primer layer of the current collector, thereby exhibiting excellent battery characteristics due to excellent adhesive strength and low interfacial resistance.

Further, the lithium secondary battery of the present invention comprises the above electrode, thereby preventing the problem of the electrode active material layer being peeled off during charging and discharging, which enables the secondary battery to be operated stably.

### [Description of Drawings]

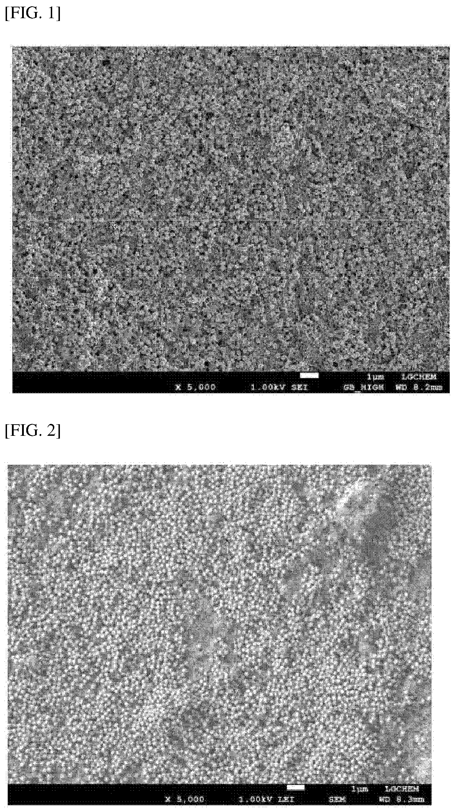

FIG. 1 is a scanning electron microscope (SEM) photograph of a primer layer of a current collector manufactured in Example 1 of the present invention.
FIG. 2 is a scanning electron microscope (SEM) photograph of a primer layer of a current collector manufactured in Comparative Example 3 of the present invention.

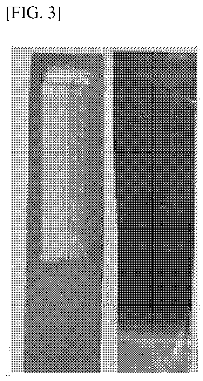

FIG. 3 is a photograph of current collectors manufactured in Example 1 and Comparative Example 3 of the present invention after a friction test in a scratch resistance evaluation. The current collector of Comparative Example 3 is shown on the left, and the current collector of Example 1 is shown on the right.

### [Best Modes of the Invention]

Hereinafter, the present invention will be described in more detail to help understand the present invention.

The terms or words used in the specification should not be construed as being limited to their ordinary or dictionary meanings, but should be interpreted as meanings and concepts consistent with the technical spirit of the present invention, based on the principle that the inventor may adequately define the concepts of terms to best describe his invention.

The terms used in the specification are used only to describe exemplary embodiments, and are not intended to limit the present invention. Singular expressions include plural expressions unless the context clearly implies otherwise.

It should be understood that terms such as "comprise", "include", and "have" as used herein are intended to designate the presence of implemented features, numbers, steps, components, or combinations thereof, but not to preclude a possibility of existence or addition of one or more other features, numbers, steps, components, or combinations thereof.

### Current Collector

The present invention provides a current collector in which a primer layer is coated on at least one surface of a metal layer.

According to one embodiment of the present invention, the current collector may comprise: a metal layer and a primer layer coated on at least one surface of the metal layer, wherein the primer layer may include a conductive material, a binder, and a thickener, wherein the conductive material may be a multi-walled carbon nanotube having a BET specific surface area of 170 m²/g or more, and the weight ratio of the conductive material to the binder may be 1:1 or more and 10 or less.

The current collector may have the primer layer coated on at least one surface of the metal layer, and for example, the primer layer may be coated on both surfaces of the metal layer. In addition, the metal layer may comprise copper, stainless steel, aluminum, nickel, titanium, fired carbon, copper or stainless steel surface-treated with carbon, nickel, titanium, silver, or the like, or an aluminum-cadmium alloy, and for example, may be at least one selected from the group consisting of aluminum foil, aluminum mesh, stainless steel foil, and copper foil.

The primer layer of the current collector includes multi-walled carbon nanotubes as a conductive material, and thus can have significantly high peeling resistance and low interfacial resistance. Specifically, the multi-walled carbon nanotubes have high strength compared to conductive materials such as carbon black, and thus can significantly improve the peeling resistance of the primer layer, and as a result, the primer layer including the multi-walled carbon nanotubes can have excellent scratch resistance. In addition, the multi-walled carbon nanotubes have excellent electrical conductivity, and thus can also reduce the interfacial resistance of the current collector.

In addition, the multi-walled carbon nanotube may have a specific surface area of 170 m²/g or more. Specifically, the specific surface area of the multi-walled carbon nanotube may be 170 m²/g or more, 180 m²/g or more, 190 m²/g or more, 200 m²/g or more, 210 m²/g or more, 220 m²/g or more, or 230 m²/g or more, and may also be 300 m²/g or less, 290 m²/g or less, 280 m²/g or less, 270 m²/g or less, 260 m²/g or less, or 250 m²/g or less. When the specific surface area of the multi-walled carbon nanotube satisfies the above range, the dispersibility of the multi-walled carbon nanotube as a conductive material can be excellent, and the conductive material can be evenly distributed within the primer layer and strongly bonded with the binder, and accordingly, the adhesive strength and peeling resistance of the primer layer can be significantly increased.

In addition, the multi-walled carbon nanotube may have an average diameter of 5 nm or more and 20 nm or less. Specifically, the average diameter may be 5 nm or more, 6 nm or more, 7 nm or more, 8 nm or more, 9 nm or more, or 10 nm or more, and may also be 20 nm or less, 19 nm or less, 18 nm or less, 17 nm or less, 16 nm or less, or 15 nm or less.

In the conventional primer layer composed of only a conductive material and a binder, since the conductive material and the binder are weakly bonded, there was a problem that the peeling resistance of the primer layer was poor, and the layer separation of the conductive material and the binder occurred due to friction. Accordingly, the primer layer of the current collector of the present invention includes a thickener, so that the binder and the conductive material can be strongly bonded to each other by the thickener, and as a result, the layer separation of the conductive material and the binder can be suppressed, thereby improving the peeling resistance of the primer layer and the adhesive strength with the electrode active material layer, and also reducing the interfacial resistance.

In addition, the weight ratio of the conductive material and the binder in the primer layer may be 1:1 or more and 10 or less, and specifically, may be 1:1 or more, 1:2 or more, 1:3 or more, 1:4 or more, or 1:5 or more, and may also be 1:10 or less, 1:9 or less, 1:8 or less, 1:7 or less, 1:6 or less, or 1:5 or less. When the weight ratio of the conductive material and the binder in the primer layer satisfies the above range, an appropriate electron movement passage can be introduced into the primer layer, and further, the adhesive strength between the primer layer and the electrode active material layer can be excellent. On the other hand, when the content of the conductive material in the primer layer is relatively increased and thus the weight ratio of the conductive material and the binder exceeds 1:10, the electron movement passage is reduced due to the decrease of the conductive material in the primer layer, and at the same time, the content of the binder, which impedes the flow of electrons, is relatively increased, so that the interfacial resistance of the current collector can be increased. In addition, when the content of the conductive material in the primer layer is relatively reduced and thus the weight ratio of the conductive material and the binder is less than 1:1, the amount of the binder is relatively reduced, and accordingly, the adhesive ability of the primer layer is significantly reduced, so that the primer layer may lose its function as a primer layer that improves the adhesive strength with the active material layer.

According to one embodiment of the present invention, the content of the thickener may be 5 parts by weight or more and 20 parts by weight or less based on the total weight of 100 parts by weight of the conductive material, the binder, and the thickener, and specifically, the content of the thickener may be 5 parts by weight or more, 6 parts by weight or more, 7 parts by weight or more, 8 parts by weight or more, 9 parts by weight or more, 10 parts by weight or more, or 11 parts by weight or more, and may also be 20 parts by weight or less, 19 parts by weight or less, 18 parts by weight or less, 17 parts by weight or less, 16 parts by weight or less, or 15 parts by weight or less. When the content of the thickener in the primer layer satisfies the above range, the thickener is sufficiently present in the primer layer, so that the conductive material and the binder can be more strongly bonded by the thickener. In addition, since the conductive material and the binder are sufficiently present in the primer layer, compared to the case where the thickener is excessively large, the primer layer can also have excellent adhesive strength with the electrode active material layer.

According to one embodiment of the present invention, the content of the conductive material may be 10 parts by weight or more and 50 parts by weight or less based on the total weight of 100 parts by weight of the conductive material, the binder, and the thickener, and specifically, the content of the conductive material may be 10 parts by weight or more, 15 parts by weight or more, 20 parts by weight or more, 25 parts by weight or more, 30 parts by weight or more, or 35 parts by weight or more, and may also be 50 parts by weight or less, 45 parts by weight or less, 40 parts by weight or less, 35 parts by weight or less, 30 parts by weight or less, or 25 parts by weight or less. When the content of the conductive material in the primer layer satisfies the above range, since a conductive material capable of bonding to the binder is sufficiently present in the primer layer, the adhesive strength of the primer layer can be high and the interfacial resistance can be low. In addition, since the current collector sufficiently includes a conductive material having high electrical conductivity, an appropriate electron movement passage can be introduced to the primer layer, and the battery performance of the electrode including the current collector can be improved.

According to one embodiment of the present invention, the content of the binder may be 35 parts by weight or more and 75 parts by weight or less based on the total weight of 100 parts by weight of the conductive material, the binder, and the thickener, and specifically, the content of the binder may be 35 parts by weight or more, 40 parts by weight or more, 45 parts by weight or more, 50 parts by weight or more, or 55 parts by weight or more, and may also be 75 parts by weight or less, 70 parts by weight or less, 65 parts by weight or less, 60 parts by weight or less, or 55 parts by weight or less. When the content of the binder in the primer layer satisfies the above range, the adhesive strength of the primer layer is improved due to the high binder content, so that the current collector can be more strongly adhered to the electrode active material layer.

According to one embodiment of the present invention, the binder may be at least one selected from the group consisting of polyvinylidene fluoride, vinylidene fluoride-hexafluoropropylene copolymer, hydrogenated nitrile butadiene rubber, styrene butadiene rubber, polyacrylonitrile, polymethyl methacrylate, polyethylene, polytetrafluoroethylene, and polyacrylic acid, and specifically, may be polyvinylidene fluoride, hydrogenated nitrile butadiene rubber, or styrene butadiene rubber. The binder has excellent dispersibility for multi-walled carbon nanotubes and adhesiveness to the current collector, so that the adhesive strength of the primer layer including the binder can be improved.

According to one embodiment of the present invention, the thickener may be at least one selected from the group consisting of carboxymethylcellulose, polyvinylpyrrolidone, and polyvinyl alcohol, and specifically, may be carboxymethylcellulose. Since the thickener has excellent dispersibility for multi-walled carbon nanotubes, the conductive material and the binder can be more strongly bonded, and the primer layer including the thickener has improved adhesive strength and peeling resistance, so that it can have excellent scratch resistance and adhesive strength for an electrode active material layer, and low interfacial resistance.

According to one embodiment of the present invention, the thickness of the primer layer may be 0.2 µm or more and 2 µm or less, and specifically, the thickness of the primer layer may be 0.2 µm or more, 0.3 µm or more, 0.4 µm or more, 0.5 µm or more, 0.6 µm or more, 0.7 µm or more, 0.8 µm or more, 0.9 µm, or 1 µm or more, and may also be 2 µm or less, 1.9 µm or less, 1.8 µm or less, 1.7 µm or less, 1.6 µm or less, 1.5 µm or less, 1.4 µm or less, 1.3 µm or less, 1.2 µm or less, 1.1 µm or less, 1 µm or less, 0.9 µm or less, 0.8 µm or less, 0.7 µm or less, or 0.6 µm or less. When the thickness of the primer layer satisfies the above range, sufficient adhesive strength between the primer layer and the electrode active material layer can be realized and scratch resistance can be excellent, compared to the case where the thickness of the primer layer is excessively thin, and interfacial resistance can be lower compared to the case where the thickness of the primer layer is excessively thick.

According to one embodiment of the present invention, the surface roughness (Ra) of the primer layer may be 1.1 µm or less, specifically 1.1 µm or less, 1 µm or less, 0.9 µm or less, or 0.8 µm or less, and may also be 0.1 µm or more, 0.2 µm or more, 0.3 µm or more, 0.4 µm or more, 0.5 µm or more, 0.6 µm or more, or 0.7 µm or more. The surface roughness of the primer layer refers to the surface roughness of one surface of the primer layer that is not in contact with the metal layer, and when the surface roughness of the primer layer satisfies the above range, the adhesive strength of the primer layer to the electrode active material layer can be excellent.

### Electrode

The present invention provides an electrode including the current collector.

According to an embodiment of the present invention, the electrode may comprise: the above current collector and an electrode active material layer, wherein the electrode active material layer is attached on the primer layer of the current collector. For example, when the primer layer is coated on both surfaces of the aluminum metal layer of the current collector, the electrode active material layer may also be attached to both surfaces of the current collector, and specifically, may be attached on the primer layer.

Specifically, the electrode active material layer may be a positive electrode active material layer including a positive electrode active material, wherein the positive electrode active material may be at least one selected from the group consisting of LiCoO₂, LiCoPO₄, LiNiO₂, LiₓNiₐCo_{b}M¹_{c}M²_{d}O₂ (M¹ and M² are each independently one selected from the group consisting of Al, Mn, Cu, Fe, V, Cr, Mo, Ga, B, W, Mo, Nb, Mg, Hf, Ta, La, Ti, Sr, Ba, Ce, F, P, S, and Y, and 0.9≤x≤1.1, 0<a<1.0, 0<b<1.0, 0≤c<0.5, 0≤d<0.5, and a+b+c+d=1), LiMnO₂, LiMnO₃, LiMn₂O₃, LiMn₂O₄, LiMn₂₋ₑM³ₑO₂(M³ is at least one selected from the group consisting of Co, Ni, Fe, Cr, Zn, and Ta, and 0.01≤e≤0.1), Li₂Mn₃M⁴O₈(M⁴ is at least one selected from the group consisting of Ci, Ni, Fe, Cu, and Zn), LiFePO₄, Li₂CuO₂, LiV₃O₈, V₂O₅, Cu₂V₂O₇, and lithium metal. The electrode active material layer may include lithium iron phosphate oxide, wherein the lithium iron phosphate oxide may be LiFePO₄.

Meanwhile, the electrode active material layer may be a negative electrode active material layer including a negative electrode active material, wherein the negative electrode active material may be a compound capable of reversible intercalation and de-intercalation of lithium. Specifically, the negative electrode active material may be a carbonaceous material such as artificial graphite, natural graphite, graphitized carbon fiber, and amorphous carbon; a metallic compound alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as SiO_{β} (0<β<2), SnO₂, vanadium oxide, and lithium vanadium oxide; or a composite including the metallic compound and the carbonaceous material, such as an Si-Ccomposite or an Sn-Ccomposite, and any one or a mixture of two or more thereof may be used. Also, a metal lithium thin film may be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and high-temperature fired carbon such as petroleum or coal tar pitch derived cokes. The negative electrode active material may be included in an amount of 80% to 99% by weight based on the total weight of the negative electrode active material layer.

Since the electrode of the present invention includes the above current collector, the electrode active material layer is strongly attached to the primer layer of the current collector, and thus, when applied to a secondary battery, the long-cycle stability of the secondary battery can be improved. In addition, since the interfacial resistance of the electrode active material layer and the primer layer is low, when applied to a secondary battery, the battery characteristics of the secondary battery can also be excellent.

According to one embodiment of the present invention, the electrode may have an adhesive strength between the electrode active material layer and the primer layer of 40 gf/2cm or more as measured at a peeling speed of 100 mm/min in a 90° peel test. Specifically, the adhesive strength may be 40 gf/2cm or more, 50 gf/2cm or more, or 60 gf/2cm or more. In the electrode of the present invention, when the adhesive strength between the electrode active material layer and the primer layer as measured by the 90° peel test satisfies the above range, the electrode active material layer and the primer layer can be strongly adhered to each other. As a result, when the electrode is applied to a secondary battery, there is an advantage in that the detachment between the current collector and the electrode active material layer is suppressed, and thus, the battery can be stably operated.

According to one embodiment of the present invention, the electrode may have an interfacial resistance between the electrode active material layer and the current collector of 0.6 Ω·cm² or less. Specifically, the interfacial resistance may be 0.6 Ω·cm² or less, 0.55 Ω·cm² or less, 0.5 Ω·cm² or less, 0.45 Ω·cm² or less, 0.4 Ω·cm² or less, 0.35 Ω·cm² or less, or 0.3 Ω·cm² or less. When the interfacial resistance between the electrode active material layer and the current collector satisfies the above range, the electrode of the present invention can have low interfacial resistance and thus excellent electrode characteristics.

Meanwhile, according to one embodiment of the present invention, the electrode may be manufactured by a commonly known wet electrode manufacturing method or dry electrode manufacturing method. In the dry electrode manufacturing method, specifically, the electrode may be manufactured by positioning and rolling a dry electrode film for forming an electrode active material layer on a current collector, wherein the film for forming the electrode active material layer may not include a solvent, may further include a conductive material and a binder together with the electrode active material, and may further include a dispersant, an additive, an aqueous binder, etc. if necessary. In addition, the film used in the dry electrode manufacturing method that does not include such a solvent is called a free-standing dry electrode film, and such a free-standing dry electrode film may be manufactured according to a commonly known method, such as that described in International Publication Nos. WO2019/103874 and WO2019/191397.

Here, the dry electrode film does not include detectable processing solvent, processing solvent residue, or processing solvent impurities, and refers to an electrode film manufactured by a dry manufacturing method without using a solvent, unlike a wet electrode film, wherein the dry manufacturing method refers to a process that does not use or substantially does not use a solvent in the manufacturing of the electrode film, that is, a process of manufacturing it in the form of a film using a mixture of a dry electrode active material and a dry binder, rather than manufacturing it with a slurry using a solvent.

### Lithium Secondary Battery

The present invention provides a lithium secondary battery including the above electrode.

According to one embodiment of the present invention, the lithium secondary battery may include the above electrode. Since the secondary battery includes the electrode of the present invention in which the current collector and the electrode active material layer are strongly attached, the problem of detachment of the electrode active material layer and the current collector is suppressed even during long-term operation of the secondary battery, so there is an advantage in that the long-cycle stability of the secondary battery is improved.

The lithium secondary battery of the present invention may be a lithium ion battery including a positive electrode, an negative electrode, a separator interposed between the positive electrode and the negative electrode, and an electrolyte, or an all-solid-state battery including a positive electrode, an negative electrode, and a solid electrolyte present between the positive electrode and the negative electrode, wherein at least one of the positive electrode or the negative electrode may be the electrode of the present invention, and specifically, the positive electrode may be the electrode of the present invention.

In addition, the lithium secondary battery may optionally further include a battery container for accommodating an electrode assembly formed of the positive electrode, negative electrode, and separator, and a sealing member for sealing the battery container.

Meanwhile, when the positive electrode is the electrode of the present invention, the negative electrode may include a negative electrode current collector and a negative electrode active material layer disposed on the negative electrode current collector. The negative electrode current collector is not particularly limited as long as it has a high conductivity without causing a chemical change in a battery, and may be, for example, copper, stainless steel, aluminum, nickel, titanium, fired carbon, copper or stainless steel that is surface-treated with carbon, nickel, titanium, silver, or the like, an aluminum-cadmium alloy, or the like. In addition, the negative electrode current collector may typically have a thickness of 3 to 500 µm, and like the positive electrode current collector, may have fine irregularities formed on the surface of the current collector to increase the bonding strength with the negative electrode active material. For example, the negative electrode current collector may be used in various forms such as a film, a sheet, a foil, a net, a porous body, a foam, a non-woven fabric, or the like.

The negative electrode active material layer may optionally include a binder and a conductive material along with the negative electrode active material described above.

The binder of the negative electrode active material layer is a component that assists in bonding between the conductive material, the active material, and the current collector, and may usually be added in an amount of 0.1% to 10% by weight based on the total weight of the negative electrode active material layer. Examples of the binder include polyvinylidene fluoride, polyvinyl alcohol, carboxymethylcellulose, starch, hydroxypropyl cellulose, regenerated cellulose, polyvinylpyrrolidone, polytetrafluoroethylene, polyethylene, polypropylene, ethylene-propylene-diene polymer, sulfonated ethylene-propylene-diene polymer, styrene-butadiene rubber, nitrile-butadiene rubber, fluorine rubber, and various copolymers thereof.

The conductive material of the negative electrode active material layer is a component to further improve the conductivity of the negative electrode active material, and may be added in an amount of 10% by weight or less, preferably 5% by weight or less, based on the total weight of the negative electrode active material layer. The conductive material is not particularly limited as long as it has conductivity without causing a chemical change in the battery, and may be, for example, graphite such as natural graphite or artificial graphite; carbon black such as acetylene black, Ketjen black, channel black, furnace black, lamp black, and thermal black; conductive fibers such as carbon fiber and metal fiber; fluorinated carbon; metal powder such as aluminum powder and nickel powder; conductive whiskers such as zinc oxide and potassium titanate; conductive metal oxides such as titanium oxide; conductive materials such as polyphenylene derivatives.

The negative electrode active material and optionally a binder and a conductive material may be dissolved or dispersed in a solvent to prepare a composition for forming a negative electrode active material layer, which may be applied on a negative electrode current collector and dried to produce the negative electrode. Alternatively, the negative electrode may be manufactured by casting the composition for forming a negative electrode active material layer on a separate support, peeling a film from the support, and then laminating the film on a negative electrode current collector. As another example, the negative electrode may be manufactured through the conventional dry electrode manufacturing method described above.

The separator is to separate the negative electrode and the positive electrode, and to provide a passage for lithium ions to move. Any separator may be used without particular limitation as long as it is generally used as a separator in a lithium secondary battery. Particularly, a separator having excellent electrolyte -retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multilayer structure.

The electrolyte may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto. As a specific example, the electrolyte may include an organic solvent and a lithium salt.

As the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methylethylcarbonate (MEC), ethyl methyl carbonate (EMC), ethylene carbonate (EC), or propylene carbonate (PC); an alcohol-based solvent such as ethyl alcohol or isopropyl alcohol; nitriles such as R-CN (R is a straight, branched or cyclic hydrocarbon group having 2 to 20 carbon atoms, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable.

The lithium salt may be any compound without particular limitation as long as it can provide lithium ions used in a lithium secondary battery. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like. The lithium salt is preferably used at a concentration ranging from 0.1 M to 2.0 M. When the concentration of the lithium salt is within the above range, the electrolyte has an appropriate conductivity and viscosity, whereby excellent electrolyte performance can be exhibited, and lithium ions can effectively move.

For the purpose of improving the lifespan characteristics of the battery, suppressing a reduction in battery capacity, improving the discharge capacity of the battery, etc., the electrolyte may further include, in addition to the above electrolyte components, at least one additive selected from the group consisting of, for example, vinylene carbonate (VC), vinyl ethylene carbonate (VEC), fluoro ethylene carbonate (FEC), propane sultone (PS), 1,3-propane sultone (PRS), ethylene sulfate (Esa), succinonitrile (SN), adiponitrile (AN), hexane tricarbonitrile (HTCN), γ-butyrolactone, biphenyl (BP), cyclohexyl benzene (CHB), tert-amyl benzene (TAB), or at least one additive, such as a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, aluminum trichloride, or the like. In this case, the additives may be included in an amount of 0.1% to 5% by weight based on the total weight of the electrolyte.

Since the lithium secondary battery including the electrode according to the present invention stably exhibits excellent capacity characteristics, output characteristics, and lifespan characteristics, it is useful in the field of portable devices such as mobile phones, laptop computers, digital cameras, and electric vehicles such as hybrid electric vehicle (HEV) and electric vehicle (EV).

The external shape of the lithium secondary battery of the present invention is not particularly limited, but may be a cylindrical type using a can, a prismatic type, a pouch type, or a coin type.

The lithium secondary battery according to the present invention can not only be used in battery cells used as a power source for small devices, but can also be preferably used as a unit cell in medium to large-sized battery modules containing multiple battery cells. Accordingly, a battery module including the lithium secondary battery as a unit cell and a battery pack including the same may be provided. The battery module or battery pack may be used as a power source for any one or more medium and large-sized devices among a power tool; electric vehicles, including electric vehicles (EV), hybrid electric vehicles, and plug-in hybrid electric vehicles (PHEV); or a system for power storage.

Hereinafter, examples of the present invention will be described in detail so that those skilled in the art can easily implement the present invention. However, the present invention may be embodied in a variety of forms and is not limited to the examples described herein.

### EXAMPLES

### Example 1

### *(1) Manufacturing of a Current Collector

Multi-walled carbon nanotubes (LG Chemical, product name: BT1004M, BET=180 m²/g, average diameter 13 nm) as a conductive material were dispersed in water at a concentration of 4 wt%, and polyvinylidene fluoride (Solvey, product name: Solef 2042) as a binder was added to the solution in which the conductive material was dispersed in an amount twice the weight of the conductive material. Subsequently, a solution of carboxymethyl cellulose dispersed in water at a concentration of 1.5 wt% was added as a thickener so that the weight of carboxymethyl cellulose was 0.4 times the weight of the conductive material, thereby preparing an aqueous slurry for forming a primer layer with a solid content of 7%.

Then, the aqueous slurry for forming a primer layer was applied to one surface of an aluminum foil having a thickness of 20 µm using a bar coater, and dried at 100°C for 2 minutes to manufacture a current collector having a primer layer having a thickness of 0.5 µm coated on one surface of the aluminum foil.

### (2) Manufacturing of a Positive Electrode

Thereafter, an LFP film was stacked on each of the primer layers present on both surfaces of the current collector so that it was in contact with the primer layer, and then rolled at room temperature and vacuum-dried at 170°C for 10 hours to manufacture a positive electrode having a positive electrode active material layer attached to one surface of the current collector.

### Examples 2 to 7 and Comparative Examples 1 to 5

The current collectors and positive electrodes of Examples 2 to 7 and Comparative Examples 1, 2, 4, and 5 were manufactured in the same manner as in Example 1, except that the contents of multi-walled carbon nanotubes, polyvinylidene fluoride, and carboxymethyl cellulose were changed as shown in Table 1 below.

The current collector and positive electrode of Comparative Example 3 were manufactured in the same manner as in Example 1, except that carbon black (Denka, product name: Li250, BET=60 m²/g) was dispersed in water at a concentration of 20 wt% instead of the multi-walled carbon nanotubes to prepare an aqueous slurry for forming a primer layer.

**[Table 1]**

| Division | | Example | | | | | | | Comparative example | | | | |
|---|---|---|---|---|---|---|---|---|---|---|---|---|---|
| | | 1 | 2 | 3 | 4 | 5 | 6 | 7 | 1 | 2 | 3 | 4 | 5 |
| Primer layer thickness (µm) | | 0.5 | 0.5 | 0.5 | 0.5 | 0.5 | 0.5 | 0.5 | 0.5 | 0.5 | 0.5 | 0.5 | 0.5 |
| Conductive material type | | MW CNT¹⁾ | MW CNT¹⁾ | MW CNT¹⁾ | MW CNT¹⁾ | MW CNT¹⁾ | MW CNT¹⁾ | MW CNT¹⁾ | MW CNT¹⁾ | MW NCT | CB²⁾ | MW CNT¹⁾ | MW CN T¹⁾ |
| Content (parts by weight ) | Conductive material | 29.27 | 39.27 | 14.25 | 24.27 | 31.42 | 28.17 | 26.55 | 29.27 | 4.24. | 29.27 | 32.18 | 25.13 |
| | Binder | 59.14 | 49.14 | 74.16 | 59.14 | 63.48 | 56.93 | 53.65 | 70.73 | 84.17 | 59.14 | 65.02 | 50.78 |
| | Thickener | 11.59 | 11.59 | 11.59 | 16.59 | 5.1 | 14.9 | 19.8 | 0 | 11.59 | 11.59 | 2.8 | 24.1 |

| | | | | | | | | | | | | | |
|---|---|---|---|---|---|---|---|---|---|---|---|---|---|
| 1) MWCNT: multi-walled carbon nanotube 2) CB: carbon black | | | | | | | | | | | | | |

### Experimental Example

### Experimental Example 1: Evaluation of Scratch Resistance and Measurement of Surface Roughness

For the current collectors of the examples and comparative examples, scratch resistance was evaluated and surface roughness was measured.

### (1) Evaluation of Scratch Resistance

For the current collectors manufactured in the examples and comparative examples, scratch resistance was evaluated, and the results were shown in Table 2 below.

The aluminum foil coated with the primer layer was punched in 3 cm X 20 cm (width x length) to manufacture a current collector specimen. The ball of the wear friction tester (Ocean Science, product name: COAD.105) was wrapped with a wiper (Kimtech Science), and then a 300 gf weight was placed thereon, and the surface of the current collector specimen coated with the primer layer was rubbed back and forth three times in a 10 cm section in the longitudinal direction at a speed of 27 cpm (cycles per minute, number of reciprocations per minute), and then the surface area of the exposed aluminum foil was measured. The surface area of the exposed aluminum foil may be measured by a method of quantifying color information using the RGB color space or the HSV color space, and specifically, the surface area was measured in the following manner:

An image of the center of the specimen on which the wear friction test was performed was obtained using a 5x magnification lens of an Optical Microscope (Olympus, product name: BX51), and then the color information of each pixel of the obtained image was quantified using the RGB color space. The color range of the metal layer of the aluminum foil to be measured was defined, and a binary image was created in which pixels belonging to this color range were marked in white and other areas were marked in black. Then, the number of areas marked in white was taken as A, and the total number of areas marked in white and black was taken as B, which were applied to the following equation (1) to calculate a K value. It can be said that the lower the K value, the better the scratch resistance of the current collector.$K = \left(A/B\right) \times 100$

In Equation (1) above, A is a surface area of the metal layer exposed as a result of rubbing the surface of the primer layer, which is 3 cm wide, 20 cm long, and 0.5 µm thick, back and forth three times in a 10 cm section in the longitudinal direction at a speed of 27 cpm and a force of 300 gf using a wear friction tester (Ocean Science, product name: COAD.105), and B is a surface area of the primer layer, wherein the A and B are measured by a method of quantifying color information using the RGB color space.

### (2) Measurement of Surface Roughness

For the current collectors manufactured in the examples and comparative examples, the surface roughness of the primer layer was measured.

A shape measurement laser microscope (KEYENCE, product name: VK-X100K) was used to perform laser scanning in an auto measure mode with a focus on the surface of the primer layer of each current collector manufactured in the examples and comparative examples at a magnification of 10 to 50.

For the measurement area, the JIS B0601:2001 standard was selected for all areas, and then the surface roughness (Ra) for the entire surface area of the primer layer was measured at 3 points while moving 1 mm at a time. Then, the average value of the surface roughness was obtained as follows.

**[Table 2]**

| Division | Example | | | | | | | Comparative example | | | | |
|---|---|---|---|---|---|---|---|---|---|---|---|---|
| | 1 | 2 | 3 | 4 | 5 | 6 | 7 | 1 | 2 | 3 | 4 | 5 |
| K value | 1.8 | 3.9 | 0.5 | 1.6 | 3.8 | 0.8 | 2.5 | 85.3 | 0.3 | 93.1 | 9.7 | 4.2 |
| Surface roughness (µm) | 0.96 | 1.1 | 0.72 | 0.88 | 0.85 | 0.99 | 0.98 | 1.33 | 0.69 | 1.17 | 0.81 | 1.07 |

As shown in Table 2 above, the current collectors of the examples all showed a small K value of less than 5, which can confirm that the current collectors of the examples have considerably excellent scratch resistance. On the other hand, it can be confirmed that the current collector of Comparative Example 1, which does not include a thickener in the primer layer, and the current collector of Comparative Example 3, which uses carbon black as a conductive material, all showed poor scratch resistance with a K value exceeding 80.Meanwhile, the current collectors of the examples all showed a surface roughness of 1.1 or less in the primer layer, and thus, it can be expected that the adhesive strength with the positive electrode active material layer will be excellent due to the low surface roughness.

### Experimental Example 2: Evaluation of Adhesive Strength and Interfacial Resistance

For the positive electrodes manufactured in the examples and comparative examples, the adhesive strength and interfacial resistance between the current collector and the positive electrode active material layer were measured, and the results were shown in Table 3 below.

### (1) Measurement of Adhesive Strength According to 90° Peel Test

Adhesive strength was measured using a Texture Analyzer (TA Analysis Instrument, Lloyd). The measurement mode was set to 90° peel test reciprocating mode, the moving speed during measurement was set to 100 mm/min, the measurement length was set to 50 mm, and the speed of returning to the original position after measurement was set to 300 mm/min.

Each positive electrode was punched in 2 cm X 10 cm (width X length) to prepare a specimen. Glass was used as a base plate (2.5 cm X 7.5 cm X 1 mm) (width X length X thickness), and double-sided tape (3M) was attached to the glass. Then, the specimen was positioned so that its short side coincided with the end of the short side of the glass substrate, and the double-sided tape and one surface of the specimen were adhered. In this case, the specimen attached to the other short side of the glass substrate was prepared by separating it by about 5 mm, and the glass substrate without the specimen attached was fixed to the TA specimen stand with its glass surface facing the floor, and one end of the specimen not attached to the double-sided tape was fixed to the TA specimen holder by standing it up perpendicular to the glass substrate. When measuring the adhesive strength, the pulley was connected so that the angle of the vertically erected specimen could be maintained at 90° with the glass substrate (floor surface), and then the adhesive strength was measured.

### (2) Measurement of Interfacial Resistance

Interfacial resistance was measured using an MP Tester (XF-057, Hioki E.E. Corporation, Japan). Each positive electrode was punched in 5 cm X 5 cm (width X length) to prepare a specimen, and the positive electrode active material layer was fixed to the specimen measuring part so that it was facing upward. The thickness of the specimen (positive electrode), the thickness of the aluminum foil, and the resistivity value of the current collector (2.82 X 10⁻⁶ Ωcm) were input, respectively, and the measurement was performed by setting 100 µA, Speed: slow, 0.5 V, and the maximum iteration number of 30 times. Each measurement was performed three times, and the average value was obtained and the result value was shown.

**[Table 3]**

| Division | Example | | | | | | | Comparative example | | | | |
|---|---|---|---|---|---|---|---|---|---|---|---|---|
| | 1 | 2 | 3 | 4 | 5 | 6 | 7 | 1 | 2 | 3 | 4 | 5 |
| Adhesive strength (gf/2cm) | 56.2 | 48.1 | 67.3 | 57.4 | 49.7 | 51.1 | 43.8 | 17 | 78.3 | 41 | 28.9 | 35.1 |
| Interfacial resistance (Ω·cm²) | 0.44 | 0.35 | 0.53 | 0.28 | 0.58 | 0.31 | 0.26 | 2.67 | 1.63 | 0.64 | 1.87 | 0.24 |

As shown in Table 3 above, the positive electrode of the example showed excellent adhesive strength between the positive electrode active material layer and the current collector, and also low interfacial resistance. In contrast, in the case of the positive electrode of Comparative Example 1 that did not include a thickener in the primer layer, the adhesive strength was significantly lower, and the interfacial resistance was considerably higher, compared to the examples. In addition, in the case of the positive electrode of Comparative Example 2 in which the content of the conductive material was too low and the weight ratio of the conductive material to the binder was about 1:20, the interfacial resistance was considerably high, and in the case of the positive electrode of Comparative Example 3 in which carbon black was used as the conductive material, the adhesive strength was lower and the interfacial resistance was higher, compared to the examples. In addition, in the case of Comparative Example 4 in which the content of the thickener was less than 5 parts by weight based on 100 parts by weight of the total of the conductive material, binder, and thickener, the adhesive strength was lower and the interfacial resistance was higher, compared to the examples, and in the case of Comparative Example 5 in which the content of the thickener exceeded 20 parts by weight, the adhesive strength was also lower than those of the examples.

## Claims

1. A current collector comprising:
a metal layer; and
a primer layer coated on at least one surface of the metal layer,
wherein the primer layer includes a conductive material, a binder, and a thickener,
wherein the conductive material is a multi-walled carbon nanotube having a BET specific surface area of 170 m²/g or more, and
a weight ratio of the conductive material to the binder is 1:1 or more and 10 or less.

2. The current collector according to claim 1, wherein a content of the thickener is 5 parts by weight or more and 20 parts by weight or less, based on 100 parts by weight of the total weight of the conductive material, binder, and thickener.

3. The current collector according to claim 1, wherein a content of the conductive material is 10 parts by weight or more and 50 parts by weight or less, based on 100 parts by weight of the total weight of the conductive material, binder, and thickener.

4. The current collector according to claim 1, wherein a content of the binder is 35 parts by weight or more and 75 parts by weight or less, based on 100 parts by weight of the total weight of the conductive material, binder, and thickener.

5. The current collector according to claim 1, wherein the binder is at least one selected from the group consisting of polyvinylidene fluoride, vinylidene fluoride-hexafluoropropylene copolymer, hydrogenated nitrile butadiene rubber, styrene butadiene rubber, polyacrylonitrile, polymethyl methacrylate, polyethylene, polytetrafluoroethylene, and polyacrylic acid.

6. The current collector according to claim 1, wherein the thickener is at least one selected from the group consisting of carboxymethylcellulose, polyvinylpyrrolidone, and polyvinyl alcohol.

7. The current collector according to claim 1, wherein a thickness of the primer layer is 0.2 µm or more and 2 µm or less.

8. The current collector according to claim 1, wherein a surface roughness of the primer layer is 1.1 µm or less.

9. An electrode comprising:
the current collector of claim 1; and
an electrode active material layer,
wherein the electrode active material layer is attached on the primer layer of the current collector.

10. The electrode according to claim 9, wherein an adhesive strength between the electrode active material layer and the primer layer is 40 gf/2cm or more as measured at a peeling speed of 100 mm/min in a 90° peel test.

11. The electrode according to claim 9, wherein an interfacial resistance between the electrode active material layer and the current collector is 0.6 Ω·cm² or less.

12. A lithium secondary battery comprising the electrode of claim 9.
